# EUROPÄISCHE PATENTSCHRIFT

(11) **EP 1 287 323 B1**
(45) Veröffentlichungstag und Bekanntmachung des Hinweises auf die Patenterteilung: **01.08.2012**
(21) Anmeldenummer: 01936394.4
(22) Anmeldetag: 23.05.2001
(51) Int. Cl.: G01K 11/32, G01D 5/26

(54) **VERFAHREN UND ANORDNUNG ZUR MEHRKANALIGEN MESSUNG VON TEMPERATUREN MITTELS OPTISCHER DETEKTION DER ENERGETISCHEN BANDLÜCKE VON FESTKÖRPERN**
METHOD AND ASSEMBLY FOR THE MULTI-CHANNEL MEASUREMENT OF TEMPERATURES USING THE OPTICAL DETECTION OF ENERGY GAPS OF SOLID BODIES
PROCEDE ET DISPOSITIF DE MESURE MULTICANAL DE TEMPERATURES PAR DETECTION OPTIQUE DE L'ECART ENERGETIQUE DE CORPS SOLIDES

(30) Priorität: 02.06.2000 DE 10027533
(43) Veröffentlichungstag der Anmeldung: 05.03.2003
(73) Patentinhaber: Helmholtz-Zentrum für Umweltforschung GmbH - UFZ, 04318 Leipzig (DE)
(72) Erfinder: RENSCHEN, Claus, Peter, 01277 Dresden (DE); ROLAND, Ulf, 04179 Leipzig (DE)
(74) Vertreter: Hengelhaupt, Jürgen
(86) Internationale Anmeldenummer: PCT/EP2001/005951
(87) Internationale Veröffentlichungsnummer: WO 2001/092841

(56) Entgegenhaltungen:
- WO-A-98/36253
- PATENT ABSTRACTS OF JAPAN vol. 008, no. 082 (P-268), 14. April 1984 (1984-04-14) & JP 58 225329 A (FUJITSU KK), 27. Dezember 1983 (1983-12-27)

## Beschreibung

Die Erfindung betrifft ein Verfahren und eine Anordnung zur mehrkanaligen Messung von Temperaturen mittels optischer Detektion der energetischen Bandlücke von Festkörpern gemäss den Ansprüchen 1 und 6.

Mögliche Einsatzgebiete der Erfindung sind u.a. die Prozessmesstechnik, insbesondere im Zusammenhang mit Mikrowellen- und Radiowellenanwendungen, die Medizinmesstechnik sowie die Nukleartechnik.

Für die Temperaturmessung unter besonderen physikalischen Bedingungen, insbesondere in starken elektromagnetischen Feldern, bei Vorhandensein aggressiver chemischer Substanzen oder unter radioaktiver Strahlung, sind optische Messmethoden bekannt, wobei hauptsächlich drei Methoden unterschieden werden:
1. Ein interferometrisches Verfahren, das die Veränderung eines optischen Lichtweges bei Variation der Temperatur ausnutzt,
2. ein Messverfahren, das die inelastische Lichtstreuung (Raman-Effekt) in Festkörpern, insbesondere einer optischen Faser, ausnutzt und
3. ein Messverfahren, das die relative Verschiebung der Bandkanten von Festkörpern, in der Regel von Halbleitern, als Funktion der Temperatur auswertet.

Das bekannte Verfahren nach Punkt 3. nutzt die Beziehungen, die zwischen der Energie von Photonen und der Energie von Elektronen eines Festkörpers bestehen. Hat ein auf den Festkörper auftreffendes Photon genügend Energie, um ein Elektron in einen angeregten Zustand zu versetzen (Anregung vom Valenz- in das Leitungsband), so kann es absorbiert werden. Aufgrund der eindeutigen Beziehung zwischen Lichtfrequenz und Photonenenergie (direkte Proportionalität) ist eine bestimmte Mindestfrequenz notwendig, damit durch Licht eine Elektronenanregung über die Bandlücke erfolgen kann. Die Wellenlänge bzw. Frequenz, ab der eine signifikante Lichtabsorption (verbunden mit einem elektronischen Band-Band-Übergang) eintritt, bildet eine materialspezifische Größe, die in einem Spektrum deutlich wird und als optische Bandkante bezeichnet wird.

Die Energie, die nötig ist, um ein Elektron vom Valenz- in das Leitungsband anzuregen, ist abhängig von der Temperatur des betreffenden Stoffes (Temperaturabhängigkeit der Bandlücke). Mit der Bestimmung der optischen Absorptionskante kann somit auf die Temperatur eines Festkörpers (z.B. GaAs-Kristalls) geschlossen werden.

Bekannte Temperaturmesssonden, die dieses Prinzip nutzen, bestehen aus einer optischen Faser und einem Messkristall, wobei zur Hin- und Rückleitung des Lichts dieselbe Faser benutzt wird (Firmenschrift "An Overview of Nortech FO Thermometer Technology" der Firma Nortech Fibronic Inc., Kanada, 1998). Die Anordnung arbeitet mit einer einzigen Lichtquelle, die zwischen mehreren Messkanälen (optische Detektionskanäle) mechanisch auf jeweils eine Messsonde umgeschaltet wird, um den Anforderungen eines praktikablen Messregimes mit mehreren Temperaturkanälen (mehr als 10) genügen zu können.

Diese konventionelle Anordnung hat einige Nachteile. Zum einen ist das Signal-Rausch/Untergrund-Verhältnis des am Detektor eintreffenden Lichtes relativ niedrig, da die Reflexion innerhalb der Faser über die gesamte Faserlänge als Störsignal eingeht. Dies macht die numerische Bestimmung der Bandkante als Berechnungsgrundlage für die Messtemperatur für größere Längen der Messsonde (Entfernung zwischen Messpunkt und Messgerät) schwierig, fehlerbehaftet und störanfällig. Das Umschalten auf die einzelnen Messkanäle limitiert zum anderen die Messgeschwindigkeit, die Variabilität bezüglich der Reihenfolge der Messkanäle und des Zeitpunkts der Messung.

In der EP 000 65 30 A1 wird ein faseroptisches Temperaturmessgerät für die einkanalige Messung beschrieben, bei dem entweder mindestens zwei Lichtquellen (bzw. Filter) oder zwei Detektoren (bzw. Filter) verwendet werden, um zwei getrennte Frequenzbereiche zu erhalten. Die Messung in zwei Frequenzbereichen ist notwendig.

WO 98/36253 A offenbart ein im Prinzip einkanaliges System zur optischen Temperaturmessung, das mehrere Referenzkanäle aufweist, um ein möglichst genaues Messergebnis zu erhalten. Auf einem thermoelektrischen Kühler sind alle Komponenten, d.h. mehrere Lichtquellen, Sensoren und Empfänger auf möglichst kleinem Raum zu einem Transmitter-Receiver-Modul angeordnet. Dadurch sollen die Umgebungseinflüsse, insbesondere Temperaturschwankungen, reduziert und somit die Messgenauigkeit erhöht werden. Die verschiedenen Empfänger werten dabei unterschiedliche Bereiche des Spektrums aus, so dass noch verbleibende Drifts durch entsprechende Kompensationsverfahren ausgeglichen werden.

JP 58225329 A offenbart eine Vorrichtung, um die Temperaturverteilung eines Objektes zu messen. Dazu wird eine Vorrichtung offenbart, bei der die Temperatur eines Objektes an verschiedenen Stellen abgenommen und gemittelt wird. Mittels einer Lichtquelle werden mehrere Sensoren gleichzeitig beleuchtet. Die resultierenden Signale werden dann auf einem CCD Chip detektiert.

Der Erfindung liegt daher die Aufgabe zugrunde, ein Verfahren und eine Anordnung anzugeben, mit denen die Nachteile des Standes der Technik vermieden und mit denen die Messgenauigkeit, die mögliche Länge der Messsonden, die Messgeschwindigkeit und die Flexibilität, insbesondere bei mehrkanaligen Messanordnungen, erhöht werden können.

Die Aufgabe wird erfindungsgemäß gelöst durch die Merkmale der Ansprüche 1 und 6.

Erfindungsgemäß wird ein Verfahren zur mehrkanaligen Temperaturmessung mittels optischer Detektion der energetischen Bandlücke von Festkörpern mit elektrischen Lichtquellen, Messsonden und einem die Frequenz des von den Messsonden zurück geleiteten Lichts messenden, wellenlängensensitiven Detektionssystem offenbart, wobei das von den eingeschalteten Lichtquellen emittierte Licht über die der jeweiligen Lichtquelle zugeordnete Lichtleitfaser zu einem der Lichtquelle zugeordneten Festkörpersensor geleitet wird, in der das optische Signal temperaturabhängig modifiziert wird, wobei aus einer Anzahl von mindestens zwei Lichtquellen mittels einer Steuereinheit eine oder mehrere Lichtquellen über definierte Zeitabschnitte für verschiedene Messkanäle eingeschaltet werden, die modifizierten optischen Signale über Lichtleitfasern in einem Mittel zur optischen Ankopplung und Zusammenführung der modifizierten optischen Signale aller Festkörpersensoren vereinigt werden, das resultierende optische Signal über Mittel zur Erstellung einer permanenten optischen Verbindung zu einem optischen Detektionssystem geleitet wird, in welchem die spektralen Eigenschaften des optischen Signals zeitaufgelöst in elektrische Signale umgewandelt werden, wobei das optische Detektionssystem ein Spektrometer ist und aus den zeitaufgelösten elektrischen Signalen durch eine Auswerteeinheit eine oder mehrere Temperaturen berechnet werden, die den Lichtquellen und den damit verbundenen Festkörpersensoren (Messkanälen) zugeordnet werden.

Die erfindungsgemäße Anordnung zur Temperaturmessung mittels optischer Detektion der energetischen Bandlücke von Festkörpern umfasst: elektrische Lichtquellen, Festkörpersensoren mit temperaturabhängiger Absorption, die im zu messenden Bereich angeordnet sind und als Messsonden dienen, und mindestens ein die Frequenz des von den Messsonden zurückgeleiteten Lichts messenden, wellenlängensensitiven Detektionssystem, wobei mindestens zwei elektrisch einzeln ansteuerbare Lichtquellen mittels jeweils einer Lichtleitfaser mit den Eingängen von jeweils mindestens einer faseroptischen Transmissionszelle verbunden sind, deren Ausgänge über Lichtleitfasern mit einem optischen Mittel zur optischen Ankopplung und Zusammenführung der modifizierten optischen Signale aller Festkörpersensoren und dessen Ausgang über ein Mittel zur Erstellung einer permanenten optischen Verbindung mit einem optischen Detektionssystem, dessen Ausgang mit einer Auswerteeinheit/Steuereinheit, welche zugleich die elektrisch ansteuerbaren Lichtquellen schaltet, verbunden sind, wobei das optische Detektionssystem ein Spektrometer ist.

Zweckmäßige Ausgestaltungen der Erfindung sind Gegenstand der Unteransprüche.

In einer zweckmäßigen Ausführungsform wird die lichtleitende Verbindung zwischen der Lichtquelle und dem Festkörpersensor von der lichtleitenden Verbindung zwischen Festkörpersensor und Detektor getrennt.

Die Messsonde besteht mithin aus einer das Licht von der Lichtquelle zum Festkörpersensor zuführenden Verbindung, dem Festkörpersensor und einer separaten, das Licht vom Festkörpersensor zum Detektor abführenden Verbindung.

Bei mehrkanaligen Messanordnungen ist jeder lichtleitenden Verbindung zwischen Lichtquelle und Festkörpersensor eine eigene Lichtquelle zugeordnet, die einzeln ansteuerbar ist. Die vom Festkörpersensor wegführenden lichtleitenden Verbindungen werden an einen optischen Mischer geführt, der mit dem Detektionssystem, zweckmäßig einem Spektrometer, permanent optisch verbunden ist. Auf einen optisch-mechanischen Schalter kann deshalb verzichtet werden. Die Abfrage der einzelnen Messkanäle wird durch die zeitlich versetzte Ansteuerung der Lichtquellen und die adäquate Auswertung des Detektorsignals realisiert.

Mit der erfindungsgemäßen Lösung wird gegenüber bisher bekannten Systemen eine wesentlich größere Messgenauigkeit erzielt, die Verwendung deutlich längerer Messsonden (bis zu 2 km) wird möglich und bei mehrkanaligen Anordnungen kann eine höhere Kanalabtastrate erreicht werden.

Demgegenüber hat sich bei konventionellen Anordnungen gezeigt, dass die optische Rückstreuung einer Einzelfaser das Signal-Rausch/Untergrund-Verhältnis des Messsignals signifikant verringert, wodurch die numerische Bestimmung der Bandkante als Berechnungsgrundlage für die Messtemperatur erheblich erschwert und die Länge der Messsonde limitiert wird.

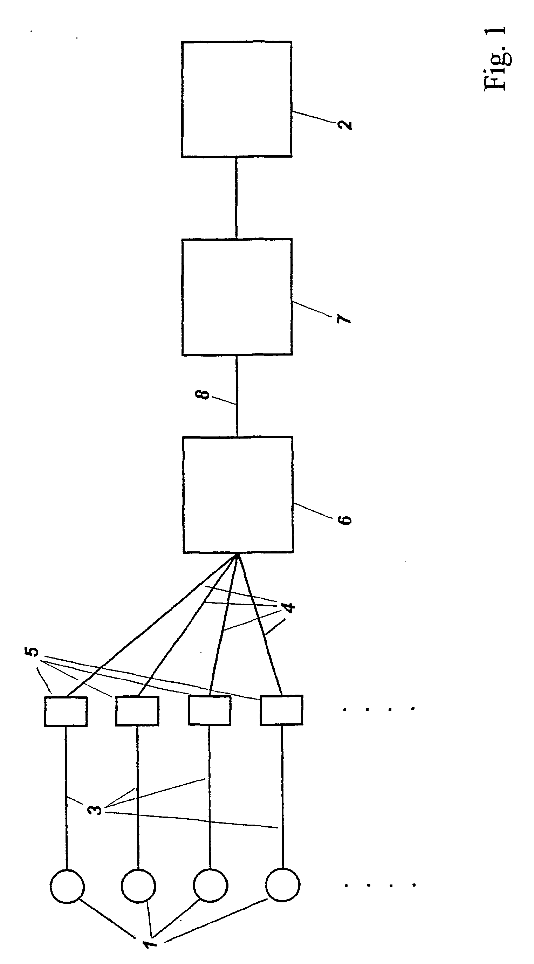

Die Erfindung soll nachstehend anhand eines Ausführungsbeispiels näher erläutert werden. Die zugehörige Zeichnung zeigt in der einzigen Figur eine erfindungsgemäße Messanordnung.

Die Anordnung arbeitet mit mindestens einer elektrischen Lichtquelle 1, mindestens einer Messsonde 5 und einem das Spektrum des von der Messsonde 5 zurückgeleiteten Lichts messenden, wellenlängensensitiven Detektor, wobei die Messsonde 5 aus einem Festkörpersensor mit temperaturabhängiger Absorption, der im zu messenden Bereich angeordnet ist, und lichtleitenden Verbindungen zur Lichtquelle und zum Detektor besteht.

Als Lichtquelle werden LED 1 verwendet, deren Emissionsmaximum bei 920 nm liegt und die eine Halbwertsbreite von ca. 50 nm besitzt. Mit diesen Werten wird bei der Verwendung von Galliumarsenid (GaAs) als Sensormaterial ein Temperaturbereich bis ca. 150°C abgedeckt. Die LED 1 werden von einer Steuereinheit 2 einzeln angesteuert. Sie lassen sich sehr schnell an- und ausschalten, so dass bei mehrkanaligen Anordnungen eine hohe Abtastfrequenz erreichbar ist.

Die Sensoren bestehen aus zwei jeweils 50 m langen optischen Lichtleitfasern 3,4 mit einem Faserquerschnitt von 100 µm, die mit einem Galliumarsenid-Sensorkristall 5 im Transmissionsmodus optisch verbunden sind. Jeder Lichtleitfaser 3 ist eine eigene LED 1 fest zugeordnet.

Die Enden der Lichtleitfasern 4, die das vom Sensorkristall 5 kommende Licht führen, werden auf einen optischen Mischer 6 geführt. Der Mischer 6 besteht aus einem lichtstreuenden Polymer. Er ist kugelförmig mit einem Durchmesser von ca. 1 cm ausgebildet und realisiert die optische Ankopplung der Lichtleitfasern 4 zu einem Spektrometer 7. Die Verbindung zwischen Mischer 6 und Spektrometer 7 erfolgt wiederum mit einer Lichtleitfaser 8.

Der Mischer 6 soll die Lichtsignale aus allen Lichtleitfasern 4 der angeschlossenen Sensorkristalle 5, ggf. unter Tolerierung von Leitungsverlusten, gleichgewichtig kombinieren. Mit ihm werden alle Messkanäle gleichzeitig und permanent auf den Detektor, hier das Spektrometer 7, geschaltet.

Das Spektrometer 7 besteht zweckmäßig aus einer CCD-Zeile und einem fest justierten optischen Gitter. Es ist für die Messung in einem Wellenlängenbereich von 850 bis 1100 nm ausgelegt. Das durch den Sensorkristall 5 modifizierte Emissionsspektrum wird hinsichtlich der optischen Bandkante, repräsentiert durch einen Wendepunkt, numerisch ausgewertet. Die Funktion kann in der Steuereinheit 2, u.U. mit Display, integriert sein.

### Bezugszeichenliste

- 1: LED (Lichtquelle)
- 2: Steuereinheit
- 3: Lichtleitfaser
- 4: Lichtleitfaser
- 5: Festkörpersensor (Sensorkristall)
- 6: Optischer Mischer
- 7: Spektrometer
- 8: Lichtleitfaser

## Patentansprüche

1. Verfahren zur mehrkanaligen Temperaturmessung mittels optischer Detektion der energetischen Bandlücke von Festkörpern mit elektrischen Lichtquellen, Messsonden und einem die Frequenz des von den Messsonden zurück geleiteten Lichts messenden, wellenlängensensitiven Detektionssystem, wobei das von den eingeschalteten Lichtquellen emittierte Licht über die der jeweiligen Lichtquelle zugeordnete Lichtleitfaser zu einem der Lichtquelle zugeordneten Festkörpersensor geleitet wird, in der das optische Signal temperaturabhängig modifiziert wird, wobei
- aus einer Anzahl von mindestens zwei Lichtquellen mittels einer Steuereinheit eine oder mehrere Lichtquellen über definierte Zeitabschnitte für verschiedene Messkanäle eingeschaltet werden,
- die modifizierten optischen Signale über Lichtleitfasern in einem Mittel zur optischen Ankopplung und Zusammenführung der modifizierten optischen Signale aller Festkörpersensoren vereinigt werden,
- das resultierende optische Signal über Mittel zur Erstellung einer permanenten optischen Verbindung zu einem optischen Detektionssystem geleitet wird, in welchem die spektralen Eigenschaften des optischen Signals zeitaufgelöst in elektrische Signale umgewandelt werden, wobei das optische Detektionssystem ein Spektrometer ist und
- aus den zeitaufgelösten elektrischen Signalen durch eine Auswerteeinheit eine oder mehrere Temperaturen berechnet werden, die den Lichtquellen und den damit verbundenen Festkörpersensoren (Messkanälen) zugeordnet werden.

2. Verfahren zur Temperaturmessung nach Anspruch 1, **dadurch gekennzeichnet, dass** alternierend jeweils nur eine Lichtquelle eingeschaltet wird.

3. Verfahren zur Temperaturmessung nach den Ansprüchen 1 und 2, **dadurch gekennzeichnet, dass** die Lichtquellen periodisch eingeschaltet werden.

4. Verfahren zur Temperaturmessung nach Anspruch 1, **dadurch gekennzeichnet, dass** mehrere Lichtquellen periodisch mit unterschiedlichen Frequenzen eingeschaltet werden.

5. Verfahren zur Temperaturmessung nach den Ansprüchen 1 bis 4, **dadurch gekennzeichnet, dass** der Festkörpersensor im Transmissions- und/oder Reflexions- und/oder im diffusen Reflexionsmodus arbeitet.

6. Anordnung zur Temperaturmessung mittels optischer Detektion der energetischen Bandlücke von Festkörpern mit elektrischen Lichtquellen (1), Festkörpersensoren (5) mit temperaturabhängiger Absorption, die im zu messenden Bereich angeordnet sind und als Messsonden dienen, und mindestens einem die Frequenz des von den Messsonden zurückgeleiteten Lichts messenden, wellenlängensensitiven Detektionssystem (7), wobei mindestens zwei elektrisch einzeln ansteuerbare Lichtquellen (1) mittels jeweils einer Lichtleitfaser (3) mit den Eingängen von jeweils mindestens einer faseroptischen Transmissionszelle (5) verbunden sind, deren Ausgänge über Lichtleitfasern mit einem optischen Mittel zur optischen Ankopplung und Zusammenführung der modifizierten optischen Signale aller Festkörpersensoren (6) und dessen Ausgang über ein Mittel zur Erstellung einer permanenten optischen Verbindung (8) mit einem optischen Detektionssystem (7), dessen Ausgang mit einer Auswerteeinheit/Steuereinheit (2), welche zugleich die elektrisch ansteuerbaren Lichtquellen (1) schaltet, verbunden sind, wobei das optische Detektionssystem (7) ein Spektrometer ist.

7. Anordnung zur Temperaturmessung nach Anspruch 6, **dadurch gekennzeichnet, dass** die Lichtquellen (1) Lumineszenzdioden mit relativ grosser spektraler Bandbreite sind.

8. Anordnung zur Temperaturmessung nach einem der Ansprüche 6 oder 7,
**dadurch gekennzeichnet, dass** die optischen Messsonden aus jeweils einer lichtzuführenden und einer lichtabführenden Glasfaser (3,4) gebildet sind, zwischen denen der Festkörpersensor (5) mit temperaturabhängiger optischer Absorption angeordnet ist.

9. Anordnung zur Temperaturmessung nach einem der vorhergehenden Ansprüche, **dadurch gekennzeichnet, dass** der Festkörpersensor (5) ein undotierter Halbleiter ist.

10. Anordnung zur Temperaturmessung nach Anspruch 6, **dadurch gekennzeichnet, dass** das optische Detektionssystem (7) eine CCD-Zeile mit fest justiertem optischen Gitter ist.

11. Anordnung zur Temperaturmessung nach einem der Ansprüche 6 bis 10 **dadurch gekennzeichnet, dass** das Mittel zur optischen Ankopplung und Zusammenführung der modifizierten optischen Signale aller Festkörpersensoren ein optischer Mischer ist.

12. Anordnung zur Temperaturmessung nach einem der Ansprüche 6 bis 11 **dadurch gekennzeichnet, dass** das Mittel zur Erstellung einer permanenten optischen Verbindung eine Lichtleitfaser ist.

## Claims

1. Method for multi-channel temperature measurement by means of optical detection of the energy band-gap of solid-state bodies, using electrical light sources, measurement probes and a wavelength-sensitive detection system measuring the frequency of the light reflected back from the measurement probes, the light emitted by the light sources when switched on being guided via the optical fibre assigned to the respective light source to a solid-state sensor assigned to the light source, in which the optical signal is modified as a function of temperature, wherein
- from a number of at least two light sources, one or a plurality of light sources are switched on by means of a control unit during defined time periods for different measurement channels
- the modified optical signals are combined via optical fibres in a means for optical coupling and combination of the modified optical signals from all solid-state sensors,
- the resulting optical signal is guided, via means for creating a permanent optical connection, to an optical detection system in which the spectral properties of the optical signal are converted in a time-resolved manner into electrical signals, the optical detection system being a spectrometer, and
- from the time-resolved electrical signals, by means of an analysis unit one or a plurality of temperatures are calculated which are assigned to the light sources and the solid-state sensors (measurement channels) connected thereto.

2. The method for temperature measurement according to Claim 1, **characterized in that** only one light source is switched on alternately.

3. The method for temperature measurement according to Claims 1 and 2, **characterized in that** the light sources are periodically switched on.

4. The method for temperature measurement according to Claim 1, **characterized in that** a plurality of light sources are switched on periodically with different frequencies.

5. The method for temperature measurement according to Claims 1 to 4, **characterized in that** the solid-state sensor operates in the transmission mode and/or reflection mode and/or the diffuse reflection mode.

6. Arrangement for temperature measurement by means of optical detection of the energy band gap of solid-state bodies having electrical light sources (1), solid-state sensors (5) with temperature-dependent absorption which are arranged in the region to be measured and which serve as measurement probes, and having at least one wavelength-sensitive detection system (7) measuring the frequency of the light reflected back from the measurement probes, wherein at least two individually electrically drivable light sources (1) are each connected by means of an optical fibre (3) to the inputs of in each case at least one fibre-optic transmission cell (5), the outputs of which are connected via optical fibres to an optical means for optical coupling and combination of the modified optical signals from all solid-state sensors (6), the output of which is connected via a means for creating a permanent optical connection (8) to an optical detection system (7), the output of which is connected to an analysis/control unit (2) which switches the electrically drivable light sources (1) at the same time, wherein the optical detection system (7) is a spectrometer.

7. The arrangement for temperature measurement according to Claim 6, **characterized in that** the light sources (1) are luminescent diodes with relatively large spectral bandwidth.

8. The arrangement for temperature measurement according to any one of Claims 6 or 7, **characterized in that** that the optical measurement probes are each formed from one light-input and one light-output optical fibre (3, 4), between which the solid-state sensor (5) with temperature-dependent absorption is arranged.

9. The arrangement for temperature measurement according to any one of the preceding claims, **characterized in that** the solid-state sensor (5) is an undoped semiconductor.

10. The arrangement for temperature measurement according to Claim 6, **characterized in that** the optical detection system (7) is a CCD line with a permanently adjusted optical lattice.

11. The arrangement for temperature measurement according to any one of Claims 6 to 10, **characterized in that** the means for optical coupling and combination of the modified optical signals from all solid-state sensors is an optical mixer.

12. The arrangement for temperature measurement according to any one of Claims 6 to 11, **characterized in that** the means for creating a permanent optical connection is an optical fibre.

## Revendications

1. Procédé pour la mesure de température multicanaux au moyen d'une détection optique de l'écart de bande énergétique de solides avec des sources lumineuses électriques, des sondes de mesure et un système de détection mesurant la fréquence de la lumière renvoyée par les sondes de mesure et sensible à la longueur d'onde, la lumière émise par les sources de lumière enclenchées étant dirigée via la fibre optique attribuée à la source lumineuse vers un capteur de corps solide attribué à la source de lumière, fibre dans laquelle le signal optique est modifié en fonction de la température,
- une ou plusieurs sources de lumière provenant d'au moins deux sources de lumière étant enclenchées au moyen d'une unité de commande pendant des périodes de temps définies pour différents canaux de mesure,
- les signaux optiques modifiés étant réunis par des fibres de guidage de lumière dans un moyen pour l'accouplement optique et le guidage conjoint des signaux optiques modifiés de tous les capteurs de corps solides,
- le résultat optique résultant étant acheminé par des moyens pour la création d'une liaison optique permanente vers un système de détection optique, dans lequel les propriétés spectrales du signal optique sont modifiées en signaux électriques avec résolution dans le temps, le système de détection optique étant un spectromètre et
- une ou plusieurs températures étant calculées à partir des signaux électriques résolus dans le temps par une unité d'analyse, lesquelles températures sont attribuées aux sources de lumière et aux capteurs de corps solides (canaux de mesure) reliés à ces sources.

2. Procédé pour la mesure de la température selon la revendication 1, **caractérisé en ce que**, en alternance, à chaque fois uniquement une source de lumière est enclenchée.

3. Procédé pour mesurer la température selon les revendications 1 et 2, **caractérisé en ce que** les sources de lumière sont enclenchées de façon périodique.

4. Procédé pour mesurer la température selon la revendication 1, **caractérisé en ce que** plusieurs sources de lumière sont enclenchées périodiquement avec différentes fréquences.

5. Procédé pour mesurer la température selon les revendications 1 à 4, **caractérisé en ce que** le capteur de corps solide travaille dans le mode de transmission et/ou le mode de réflexion et/ou dans le mode de réflexion diffus.

6. Agencement pour mesurer la température au moyen d'une détection optique de l'écart énergétique de solides avec des sources de lumière électriques (1), des capteurs de corps solide (5) avec absorption dépendante de la température, qui sont disposés dans la zone à mesurer et servent de sondes de mesure, et au moins un système de détection (7) mesurant la fréquence de la lumière réacheminée par les zones de mesure et sensible à la longueur d'onde, sachant qu'au moins deux sources de lumière (1) pouvant être activées individuellement au plan électrique sont
reliées au moyen de respectivement une fibre optique (3) aux entrées de respectivement au moins une cellule de transmission (5) à fibre optique, dont des sorties sont reliées par des fibres optiques à un moyen optique pour le rattachement optique et le guidage commun des signaux optiques modifiés de tous les capteurs de corps solides (6) et dont la sortie est reliée par un moyen pour la création d'une liaison (8) optique permanente à un système de détection (7) optique, dont la sortie est reliée à une unité d'analyse/unité de commande (2), qui commute en même temps les sources de lumière (1) activables électriquement, le système de détection (7) optique étant un spectromètre.

7. Agencement pour mesurer la température selon la revendication 6, **caractérisé en ce que** les sources de lumière (1) sont des diodes électroluminescentes avec une grande largeur de bande spectrale.

8. Agencement pour mesurer la température selon l'une des revendications 6 ou 7, **caractérisé en ce que** les sondes de mesure optiques sont formées chacune à partir de respectivement une fibre de verre (3, 4) amenant la lumière et une fibre de verre (3, 4) évacuant la lumière, fibres entre lesquelles est disposé le capteur de corps solide (5) avec absorption optique dépendante de la lumière.

9. Agencement pour mesurer la température selon l'une des revendications précédentes, **caractérisé en ce que** le capteur de corps solide (5) est un semi-conducteur non dopé.

10. Agencement pour mesurer la température selon la revendication 6, **caractérisé en ce que** le système de détection optique (7) est une ligne de CCD avec une grille optique ajustée de façon fixe.

11. Agencement pour mesurer la température selon l'une des revendications 6 à 10, **caractérisé en ce que** le moyen pour le rattachement optique et le guidage commun des signaux optiques modifiés de tous les capteurs de corps solides est un mélangeur optique.

12. Agencement pour mesurer la température selon l'une des revendications 6 à 11, **caractérisé en ce que** le moyen pour la création d'une liaison optique permanente est une fibre optique.
